Europäisches Patentamt

European Patent Office

Office européen des brevets

(11) Veröffentlichungsnummer: **0 093 789**
**A1**

(12) **EUROPÄISCHE PATENTANMELDUNG**

(21) Anmeldenummer: **82104053.2**

(22) Anmeldetag: **10.05.82**

(51) Int. Cl.³: **H 01 M 10/06,** H 01 M 10/04, H 01 M 10/42

(43) Veröffentlichungstag der Anmeldung: **16.11.83**
Patentblatt **83/46**

(71) Anmelder: **UNITECHNIKA IPARI SZÖVETKEZET,**
**Hidasköz 7-11, H-1107 Budapest (HU)**

(72) Erfinder: **Végh, István, Limanova tér 19,**
**H-1149 Budapest (HU)**
Erfinder: **Fekete, József, Frangepán ut 81/b,**
**H-1135 Budapest (HU)**

(74) Vertreter: **Kern, Wolfgang Dipl.-Ing. et al, Patentanwälte**
**Tischer, Kern & Brehm Albert-Rosshaupter-Strasse 65,**
**D-8000 München 70 (DE)**

(84) Benannte Vertragsstaaten: **AT BE CH DE FR GB IT LI LU NL SE**

(54) **Doppelstromkreis-Akkumulator.**

(57) Die Erfindung betrifft einen Doppelstromkreis-Akkumulator, d. h. einen Akkumulator mit zwei Stromkreisen, der mehrere miteinander in Reihe geschaltete Zellen enthält, wobei jede einzelne Zelle innerhalb der Zelle in einem gemeinsamen Säureraum angeordnete, miteinander parallel geschaltete positive und miteinander parallel geschaltete negative Platten aufweist, die mittels Separatorplatten voneinander getrennt sind, und wobei ferner der Akkumulator positive und negative Klemmen aufweist.

Der erfindungsgemäße Akkumulator ist dadurch gekennzeichnet, daß mindestens eine äußere Zelle des Akkumulators mindestens eine Platte aufweist, deren Polarität der Polarität der an der genannten Zelle vorhandenen Klemme entspricht und die von den übrigen Platten gleicher Polarität unabhängig in der Zelle angeordnet ist und eine separate Klemme aufweist, während die übrigen Zellen in herkömmlicher Weise ausgestaltet sind.

Patentanwälte
Dipl.-Ing. Herbert Tischer
Dipl.-Ing. Wolfgang Kern
Dipl.-Chem.Dr.H.P. Brehm
Albert-Rosshaupter-Straße 65
D-8000 München 70

- 1-

Doppelstromkreis-Akkumulator

Die Erfindung betrifft einen Doppelstromkreis-Akkumulator d.h. einen Akkumulator mit zwei Stromkreisen, insbesondere für Kraftfahrzeuge, der aus mehreren, miteinander in Reihe geschalteten Zellen besteht, wobei jede einzelne Zelle innerhalb der Zelle in einem gemeinsamen Säureraum angeordnete, miteinander parallel geschaltete positive und miteinander parallel geschaltete negative Platten enthält, die voneinander durch Separatorplatten abgetrennt sind; der Akkumulator weist positive und negative Klemmen auf.

Es ist eine wohlbekannte Tatsache, dass die Fahrzeugakkumulatoren bei dem Anlass des Motors, insbesondere beim Kaltanlass einer hohen Belastung ausgesetzt sind, als deren Erfolg die Nennspannung im Laufe des Anlasses bedeutend herabfällt. Diese Erscheinung meldet sich besonders bei in kaltem Wetter, bei einer niedrigen Umgebungstemperatur betriebenen Kraftfahrzeugen in einem erhöhten Mass. Es ist auch wohlbekannt, dass der Akkumulator

0093789

beim Anlass eine doppelte Aufgabe erfüllt, nämlich einerseits führt er die Verdrehung der Hauptwelle des Verbrennungsmotors mit Hilfe des Startmotors durch (welche Tätigkeit mit einem entsprechenden Moment und gehöriger Umdrehungszahl verbunden ist), anderseits bildet er die zu der Erzeugung des Zündfunkens erforderliche Energiequelle. Nun eben aus dem Gesichtspunkt der letzteren Aufgabe ist der obenerwähnte, allgemein bekannte, im Laufe der Startbetriebsweise auftretende Spannungabfall nachteilig, da infolge dessen die Intensität der Funkenerzeugung bedeutend abnimmt, wodurch der Anlass erschwert, in gewissen Fällen ja sogar verhindert wird.

Die obengeschilderte Erscheinung ist wohlbekannt und zur Beseitigung fanden zahlreiche Versuche statt, die als theoretisch begehbare Wege betrachtet werden können. Die eine Tendenz wird von den, in erster Reihe elektronischen Lösungen repräsentiert, bei denen die provisorische Aufrechterhaltung der Zündspannung wenigstens für die Dauer des Anlassens, eine gewisse Stabilisierung als Ziel gesetzt wird. (Die Verwendung eines Generators, eines abgezapften Transformators, thyristorisierte, transistorisierte Zündungen, usw.)

Die gemeinsame Charakteristik der erwähnten Lösungen besteht darin, dass diese überhaupt nicht oder nicht primär den traditionellen strukturellen Aufbau und Funktion des Akkumulators tangieren, so scheint die ausführlichere Erörterung dieser Lösungen überflüssig.

Im Sinne der anderen Tendenz hatte man z.B. als eine an der Hand liegende Lösung die Verwendung zweier, voneinander vollkommen unabhängiger Akkumulatoren vorgeschlagen. Diese Lösung konnte sich aber infolge der verbundenen Kosten und des Mehrgewichts nicht in einem weiten Kreis verbreiten und fand nur unter spezialen klimatischen Verhältnissen Verwendung.

Im Sinne eines weiteren Vorschlags werden in einem gemeinsamen Säureraum, in einer und derselben Kubatur zwei - funktionell selbstständige - Akkumulatoren ausgestaltet. Die vorgeschlagene Lösung hatte sich infolge der Kompliziertheit der strukturellen Gestaltung und der damit verbundenen ungünstigen Wirtschaftparameter nicht verbreitet.

Aus der US-PS 3 475 221 ist ein Doppelstromkreis-Akkumulator bekannt, dessen jede einzelne Zelle zwei voneinander unabhängige Plattengruppen enthält. Die zu den einzelnen Plattengruppen gehörenden Platten von gleicher Polarität sind parallel geschaltet, während die einen und die anderen, zu den verschiedenen Zellen gehörenden Gruppen separat in Reihen geschaltet sind. Auf diese Weise entstehen zwei voneinander unabhängige Akkumulatoren innerhalb eines Gehäuses. Dieser Doppelstromkreis-Akkumulator ist als Startakkumulator oder Zündungsakkumulator für Kraftfahrzeuge bestens geeignet. Bei dieser Lösung - wie es wohl ersichtlich ist - sind zwei vollkommen unabhängige Akkumulatoren erforderlich.

Der Nachteil dieser letzterwähnten Lösung besteht wieder-

- 4 -    0093789

um darin, dass sie verhältnismässig kompliziert ist
und mit den traditionellen Akkumulatoren mit dem
"Massenartikelcharakter" verglichen, schwieriger hergestellt werden kann, darüber hinaus wird die Umstellung der Produktion und eine erhöhte technologische
Disziplin beansprucht. Besonders die Kraftwagenindustrie und die, die in der Kraftwagenindustrie verwendeten, zum Einbau kommenden zusätzlichen strukturellen Einheiten erzeugende Industrie, sind wegen
der nach je niedrigeren Produktionskosten und Materialersparnis gerichteten Bestrebungen - sich aus
ihrem Lebensinteresse ergebend - nicht imstande
Schritte in Richtung der komplizierten Lösungen zu
machen, die Produktionsmehrkosten können überhaupt
nicht oder nur mit Schwierigkeiten in die Verkaufspreise mitkalkuliert werden, desweiteren würden sich
die Verkaufsschwierigkeiten bedeutend erhöhen.

Darüber hinaus, wird der bei der letzteren Lösung geschilderte, durch das Behalten der Zündspannung auf
einem höheren, stabilen Wert erreichte Vorteil an der
anderen Seite, nämlich bei der Umdrehung des Anlassermotors mit der erforderlichen Intensität, mit gewissen
Verlusten verbunden, wobei das gewünschte Optimum der
Vorteile nur auf eine bestrittbare Weise angenähert
wird. Diese Erscheinung tritt insbesondere bei den
kleindimensionierten Starterakkumulatoren der Personenkraftwagen betont auf. In den Fachkreisen werden dabei
- recht unmotiviert - auch die elektrochemischen Aspekte

0093789

der Lösung bestritten.

Der Erfindung wurde das Ziel gesetzt, die in der Einleitung geschielderte doppelte Forderung restlos zu befriedigen, gleichzeitig einen, von den Mangelhaftigkeiten der bekannten Lösungen freien Akkumulator mit einem möglichst einfachen Aufbau zu entwickeln, der besonders zu Kraftfahrzeugen vorteilhaft verwendet werden kann; eine weitere Forderung besteht darin, dass durch die Verwendbarkeit der zur Verfertigung der herkömmlichen Akkumulatoren erforderlichen Werkzeuge und durch im Wesen identische Fertigungstechnologie und Werkstoffe der Bedarf an Produktionsaufwand überhaupt nicht oder nur in einem vernachlässigbaren Masse von jenen herkömmlichen, heutzutag als Massenartikel betrachteten Akkumulatoren abweiche und der erfindungsgemässe Akkumulator als eine gegenseitig korrekte austauschbare Einheit und als Ersatz des herkömmlichen Akkumulators verwendet werden könne.

Das Wesentliche der Erfindung besteht darin, dass der aus mehreren Zellen bestehende Akkumulator - in dem die Zellen in Reihe geschaltet sind und - mit der Ausnahme der einen oder der beiden äusseren Zellen - die Zellen in herkömmlicher Art ausgestaltet sind, d.h., dass die in der Zelle vorhandenen positiven und negativen Platten separat parallel geschaltet sind, während in der einen oder in den beiden äusseren Zellen, in der Abhängigkeit, ob in der genannten Zelle eine positive oder negative Klemme vorgesehen ist, innerhalb der Zelle eine oder mehrere positiven oder eine oder mehrere negativen Platten nicht mit den sonstigen positiven bzw. negativen Platten parallel geschaltet sind, sondern eine selbstständige Gruppe bildend, separate positive bzw. negative Klemmen aufweisen. Wenn nun diese weitere Klemme als eine Hilfsklemme neben den üblichen und hier als "Hauptklemme" genannten Klemmen bezeichnet wird, wird einerseits zwischen der ursprünglichen negativen Hauptklemme und der positiven Hauptklemme, anderseits zwischen der negativen Hauptklemme und der positiven Hilfsklemme in unbelastetem Zustand die gleiche Spannung vorhanden sein; gleicherweise, wenn der Akkumulator mit einer negativen Hilfsklemme verfertigt wird, wird einerseits zwischen der positiven Hauptklemme und der negativen Hauptklemme, anderseits zwischen der positiven Hauptklemme und der negativen Hilfsklemme in unbelastetem Zustand die gleiche Spannung herrschen.

Überraschenderweise konnte es festgestellt werden, dass wenn auf die Hauptklemmen eine Belastung geschaltet wird, nämlich der Startermotor des Kraftfahrzeuges, zwischen der sich der Masse anschliessenden Hauptklemme und der Hilfsklemme von abweichender Polarität nur ein geringer Spannungsabfall entsteht, und das System sich derweise verhält, als wenn zwei selbständige Akkumulatoren vorhanden wären. Auf diese Weise ist die für die Zündung erforderliche Spannung sichergestellt.

Die letzte, auf eine speziale Art ausgebildete Akkumulatorenzelle kann auch derweise ausgestaltet werden,

·0093789.

dass die Anzahl der enthaltenen positiven und negativen Platten mit der Zahl der in der übrigen herkömmlichen Zellen vorhandenen Platten übereinstimmt, und nur eine oder mehrere Platten von entsprechender Polarität separat ausgeführt sind, wobei diese Platte oder Platten mittels einer üblichen Separatorplatte von den sonstigen Platten abgesondert ist bzw. sind; eine Gestaltung ist auch möglich, bei der anstatt der abtrennenden Separatorplatte eine elektrisch isolierende, die Säure nicht durchlassende Platte, zweckmässig eine Kunststoffplatte eingesetzt wird, die entlang ihres Umfangs, in dem gemeinsamen Säureraum die Durchströmung der Säure ermöglicht.

Eine weitere Möglichkeit besteht darin, in der letzten Zelle (wobei unter der letzten Zelle woimmer die Zelle verstanden ist, die eine Hilfsklemme aufweist und gegebenenfalls kann an beiden Enden des Akkumulators eine solche Zelle vorgesehen werden) eine oder mehrere weitere Platten und auch Platten von entgegengesetzter Polarität in ausreichender Zahl anzuordnen. In diesem Fall ist bzw. sind die sich der Hilfsklemme anschliessende Platte bzw. anschliessenden Platten gemeinsam separat ausgeführt, während die weitere Platte bzw. Platten von entgegengesetzter Polarität - wenn solche überhaupt erforderlich sind, da z.B. beim Einsetzen einer einzigen weiteren Platte eine weitere Platte mit entgegengesetzter Polarität nicht unbedingt erforderlich ist - mit den übrigen Platten von gleicher Polarität parallel geschaltet ist bzw. sind. Eine oder mehrere unabhängige, sich der Hilfsklemme anschliessende Platte bzw. Platten können senkrecht zu der Richtung der sich der Hauptklemme anschliessenden Platten angeordnet werden, inbegriffen die zugeordneten Platten von entgegengesetzter Polarität, wobei diese Platten mit entgegengesetzter Polarität innerhalb der Zelle mit den Platten von übereinstimmender Polarität parallel geschaltet werden.

Mit den bekannten herkömmlichen Akkumulatoren verglichen kann der erfindungsgemässe Akkumulator mit einer geringen Aenderung hergestellt werden, eine gleiche Spiecherkapazität voraussetzend, sind die Kosten nicht höher, als jene eines herkömmlichen Akkumulators. Mit Hinsicht darauf, dass infolge der Gestaltung mit zwei Stromkreisen auch im Laufe der Betätigung des Startermotors die zur Zündung benötigte Spannung sichergestellt wird, wird die Zünd- bzw. Anlassbereitschaft bedeutend erhöht. Es ist daher leicht einzusehen, dass die heutzutag weitgehend verwendeten herkömmlichen Akkumulatoren mit üblicher Speicherkapazität mit dem erfindungsgemässen Akkumulator mit geringerer Kapazität, mit einer gleichen bzw. erhöhten Betriebssicherheit, ersetzt werden können; als Erfolg können eine Gewichtsverminderung, Ersparnis bei dem Materialaufwand und Produktionskosten erreicht werden, was sowohl seitens des Herstellers, wie auch des Verbrauchers günstig ausgeschöpft werden kann, d.h. das entsprechende Teilungsoptimum kann leicht gefunden werden.

0093789

Der reelle Anspruch an die Erschaffung und Verwendung des erfindungsgemässen Doppelstromkreis-Akkumulators wurde bereits auch durch die Informationen und Erfahrungen (Autosalon Maine-Frankfurt, 1974) bestätigt, indem der Akkumulator mit den Entwicklungstendenzen der potentionellen Verbraucher, insbesondere der weltbekannten Firmen der Autoindustrie im Einklang steht, deren Aufmerksamkeit immer mehr auf die eine Hilfstätigkeit ausübenden Doppelstromkreis-Akkumulatoren gerichtet ist; auf diese Weise bietet die Erfindung eine Perspektive auch in der Hinsicht einer internationalen Arbeitsteilung oder Kooperation.

Die Erfindung wird anhand von vorteilhaften Ausführungsbeispielen, mit Hilfe der beiligenden Zeichnung näher erläutert.

Als Beispiel wird ein Bleiakkumulator mit sechs Zellen, d.h. 12 V Spannung beschrieben; es wird von der Voraussetzung ausgegangen, dass der Akkumulator für einen Kraftwagen ausgestaltet ist, bei dem der Masse ein negativer Pol angeschlossen ist. Bei dem Ausführungsbeispiel ist der Hilfsklemme immer nur eine einzige Platte angeschlossen, aber sinngemäss können anstatt dieser einen Platte mehrere Platten gleicher Polarität parallel geschaltet werden; in dem letzteren Fall können weitere Platten mit entgegengesetzter Polarität auch verwendet werden. Es zeigen:

Figur 1 als Beispiel einen Bleiakkumulator mit sechs
    Zellen in Draufsicht, der erfindungsgemäss neben

0093789

der positiven Hauptklemme auch eine positive Hilfsklemme aufweist.

Figur 2 die Plattenanordnung einer herkömmlichen Zelle. Selbstverständlich können auch davon abweichende herkömmliche Plattenanordnungen verwendet werden.

Figur 3 eine erfindungsgemässe, mit der Anzahl der Platten laut Figur 2 ausgestaltete letzte Zelle.

Figur 4 eine erfindungsgemässe mit einer Überschussplatte ausgestaltete Zelle dar.

Figur 5 eine Anordnung, bei der die Überschussplatten speziellerweise senkrecht an die üblich angeordneten Platten angeordnet sind.

Es soll betont werden, dass sowohl das Erwählen der Polaritäten, wie auch die gewählte Plattenzahl nur als Beispiel dienen, und der Fachmann die Platten in einer dem jeweiligen Wunsch und der Kapazität des Akkumulators entsprechenden Zahl verwenden kann; in einem unsicheren Fall, wenn es nicht bekannt ist, mit welcher Polarität die Klemme der Masse des Kraftfahrzeuges anzuschliessen ist, können die an den beiden Enden des Akkumulators vorhandenen Zellen mit einer Hilfsklemme versehen werden.

Der guten Ordnung halber soll es bemerkt werden, dass in der der Beschreibung beigelegten schematischen Darstellung die positiven Platten und die positiven Klemmen, die negativen Platten und die negativen Klemmen angezeigt wurden, während die Separatorplatten oder Isolierplatten lediglich an denjenigen Stellen veranschaulicht wurden, an welchen deren Verwendung nicht unbedingt selbstver-

ständlich ist, währenddessen wurden die in den herkömmlichen Zellen und zwischen den zusammenarbeitenden Plattenpaaren durchaus erforderlichen und üblichen Separatorplatten nicht dargestellt.

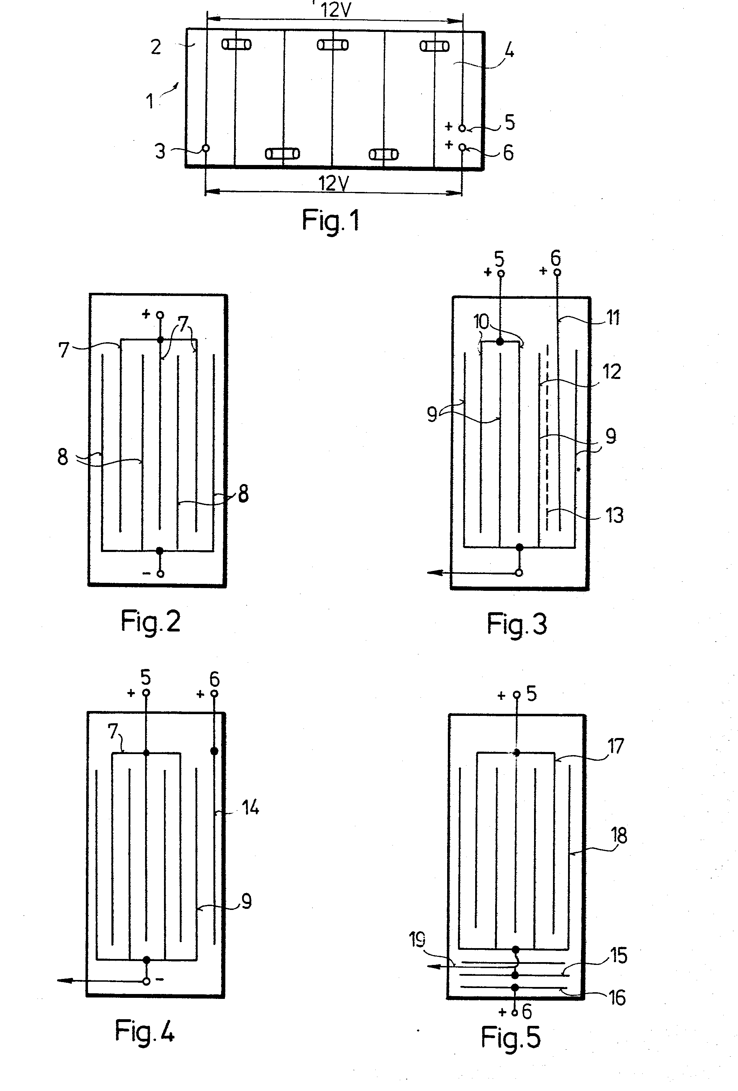

Wie es aus der Figur 1 ersichtlich ist, weist der Akkumulator 1 sechs Zellen auf, die auf die übliche Weise in Reihe geschaltet sind. Die negative Hauptklemme 3 befindet sich an der ersten Zelle 2, während die letzte Zelle 4 einerseits die positive Hauptklemme 5, andererseits eine Hilfsklemme 6 enthält. Der erfindungsgemässe Akkumulator kann zu solchen Kraftfahrzeugen verwendet werden, bei denen der Masse der negative Pol angeschlossen ist. Bei dem als Beispiel dienenden Bleiakkumulator ist in unbelastetem Zustand eine Spannungsdifferenz von 12 V zwischen den Hauptklemmen 3 und 5 vorhanden. Eine gleiche Spannungsdifferenz herrscht aber auch zwischen der Hauptklemme 3 und der Hilfsklemme 6. Wird nun der Akkumulator mit der Hauptklemme 3 der Masse des Kraftfahrzeuges angeschlossen, wobei die Hauptklemme 5 in den Stromkreis des Startermotors eingeschaltet wird und die Hilfsklemme 6 in den Stromkreis der Zündung eingefügt wird, fällt die Spannung zwischen der Hauptklemmen 3 und 5 bei Belastung, d.h. bei dem Anlass auf die herkömmliche Weise ab, wobei den praktischen Erfahrungen gemäss die Spannung zwischen der Hauptklemme 3 und der Hilfsklemme 6 innerhalb der im allgemeinen erforderlichen Startzeit nur in einem unwesentlichen Mass abfällt. Auf diese Weise steht die benötigte Zündspannung zum Starten zur Verfügung. Es soll bemerkt werden, dass wir uns mit den verschiedenen äusseren, zu dem entsprechenden Anschluss erforderlichen Elementen nicht beschäftigen.

Zwecks Vergleich ist in der Figur 2 die Plattenanordnung einer herkömmlichen Zelle des Akkumulators nach Figur 1 schematisch, die Separatorplatten weglassend, dargestellt. Hier wurden als Beispiel drei positive Platten 7 und vier negative Platten 8 verwendet, die je separat parallel geschaltet sind. Die Separatorplatten sind nicht veranschaulicht.

In der Figur 3 ist eine weitere beispielsweise Ausführung der Erfindung zu sehen, bei der eine mögliche Plattenanordnung der Zelle 4 nach Figur 1 dargestellt. Bei dieser Anordnung sind die vier negative Platten 9 den herkömmlichen Platten 8 entsprechend geschaltet, aber im Gegensatz zu der in Figur 2 dargestellten Lösung sind aus den drei positiven Platten zwei positive Platten 10 parallel geschaltet und zu der Hauptklemme 5 nach Figur 1 geführt. Abweichend von der Lösung nach Figur 2, ist die dritte Platte 11 von den beiden Platten 10 unabhängig und ist separat der Hilfsklemme 6 nach Figur 1 angeschlossen. Innerhalb der Zelle kann die übliche Separatorplatte zwischen den positiven und negativen Platten unverändert anwesend bleiben, in einem gegebenen Fall kann jedoch die zwischen der Platte 11 und der Platte 12 vorgesehene Separatorplatte mit einer elektrisch isolierenden, die Säure nicht durchlassenden Platte ersetzt werden, die hier mit der Positionnummer 13 bezeichnet ist. Die Platte 13

- 13 -

0093789

sichert wenigstens entlang eines Teils seines Umfangs die Durchströmung der Säure, auf diese Weise sind alle sich in der Zelle befindenden Platten in einem gemeinsamen Säureraum angeordnet.

Die in der Figur 4 dargestellte Plattenanordnung weicht insofern von der Plattenanordnung nach Figur 2 ab, indem eine zusätzliche Platte 14 - die von den Platten 7 unabhängig ist - vorgesehen ist, und die parallel geschalteten Platten 7 dieser Zelle zu der positiven Hauptklemme 5 angeschlossen sind, während die Platte 14 sich der Hilfsklemme 6 anschliesst.

In Figur 5 ist eine Anordnung dargestellt, bei der ausser den in der herkömmlichen Zelle vorhandenen positiven und negativen Platten auch eine negative Platte 15 und eine positive Platte 16 - die auf die Richtung der vorhererwähnten Platten senkrecht liegen - vorgesehen sind. Die herkömmlichen Plattengruppen der Zelle wurden hier mit den Positionnummern 17 und 18 bezeichnet. Die positiven Platten 17 sind parallel geschaltet und schliessen sich der Hauptklemme 5 an. Die zusätzliche negative Platte 15 ist innerhalb der Zelle mit der Gruppe der negativen Platten 18 verbunden, wobei diese Plattengruppe mit der positiven Plattengruppe der benachbarten Zelle - der Reihenschaltung entsprechend - verbunden ist.

Die zusätzliche positive Platte 16 ist unabhängig von den sonstigen Platten mit der Hilfsklemme 6 verbunden. Die zusätzlichen Platten 15 und 16 können durch die Separatorplatte oder Isolierplatte 19 von dem Raum der übrigen Platten derweise separiert werden, dass inzwischen die freie Strömung der Säure sichergestellt ist, d.h. innerhalb der Zelle alle Platten in einem gemeinsamen Säureraum angeordnet sind.

In gegebenem Fall, insofern die positive Klemme der Masse angeschlossen ist, sind die Anordnungen im wesentlichen den obenbeschriebenen ähnlich, bloss die sich bei der Klemme mit negativer Polarität befindende Zelle wird mit negativer Haupt- und Hilfsklemme versehen, wobei die Platten der letzten Zelle dementsprechend sinngemäss angeordnet werden.

Wie es bereits erwähnt wurde, können die Zellen an beiden Enden des Akkumulators mit positiven bzw. negativen Haupt- und Hilfsklemme ausgestaltet werden. Selbstverständlich wird eine derartige Lösung nur im Bedarfsfall angewendet.

- 15 -                        0093789

PATENTANSPRÜCHE

1. Doppelstromkreis-Akkumulator, der aus mehreren mit einander in Reihe geschalteten Zellen besteht und jede einzelne Zelle innerhalb der Zelle in einem gemeinsamen Säureraum angeordnete, miteinander parallel geschaltete positive und miteinander parallel geschaltete negative Platten enthält, die durch Separatorplatten voneinander getrennt sind, desweiteren der Akkumulator negative und positive Klemmen aufweist, dadurch g e k e n n z e i c h n e t , dass mindestens eine äussere Zelle des Akkumulators mindestens eine Platte enthält, deren Polarität der Polarität der an der genannten Zelle vorhandenen Klemme (des Pols) entspricht, die von den übrigen Platten von gleicher Polarität unabhängig innerhalb der Zelle angeordnet ist und eine separate Klemme aufweist, während die übrigen Zellen herkömmlich ausgestaltet sind.

2. Akkumulator nach Anspruch 1, dadurch g e k e n n - z e i c h n e t , dass die Zahl der in der erwähnten äusseren Zelle vorhandenen Platten mit der Zahl der in den übrigen herkömmlichen Zellen vorhandenen Platten übereinstimmt, aber aus der Gruppe der Platten entsprechender Polarität wenigstens eine Platte für die separate Ausführung abgetrennt ist.

3. Akkumulator nach Anspruch 1, dadurch g e k e n n - z e i c h n e t , dass die eine oder die mehreren, separat ausgeführten Platten - falls mehrere, in paralleler Schaltung - über die Zahl der in den herkömmlichen Zellen vorhandenen Platten, als zusätzliche Platten vorgesehen sind, während - im Bedarfsfall - in der Zelle auch weitere zusätzliche Platten mit entgegengesetzter Polarität angeordnet werden können, die mit den Platten von gleicher Polarität parallel geschaltet sind.

4. Akkumulator nach Anspruch 3, dadurch g e k e n n - z e i c h n e t , dass in der die Platte oder die Platten mit separater Klemme enthaltenden Zelle mindestens je eine, miteinander mitwirkende zusätzliche Platte unterschiedlicher Polarität auf der Richtung der Platten mit gemeinsamer Klemme senkrecht angeordnet ist, aus denen die eine mit einer unabhängigen Klemme versehene Platte ist, während die andere zusätzliche Platte entgegengesetzter Polarität mit den übrigen Platten gleicher Polarität innerhalb der Zelle verbunden ist.

5. Akkumulator nach jedwelchem der Ansprüche 1 bis 4, dadurch g e k e n n z e i c h n e t , dass die mit einer separaten Klemme versehene Platte bzw. versehenen Platten und die mit derselben bzw. mit denselben mitwirkende Platte bzw. Platten von entgegengesetzter Polarität mit einer Separatorplatte von den übrigen Platten abgesondert sind, oder eine elektrisch isolierende, die Säure nicht durchlassende Platte vorgesehen ist, an deren Umfang eine die Säureströmung zulassende Spalte ausgestaltet ist.

0093789

Fig. 1

Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | H 01 M 10/06 |
| X | LU-A- 67 785 (ISTVAN VEGH et al.) <br> * Patentanspruch 1; Figur 1; Seite 5, Absatz * | 1-5 | H 01 M 10/04 <br> H 01 M 10/42 |
| | --- | | |
| X | EP-A-0 023 280 (VARTA BATTERIE A.G.) <br> * Patentanspruch 1; Seite 1, Zeile 26 bis Seite 2, Zeile 5; Seite 2, Zeilen 10-14 * | 1-5 | |
| | --- | | |
| A | US-A-1 924 959 (PATTERSON) <br> * Patentansprüche 1,2; Spalte 1, Zeilen 28-35 * | 1-5 | |
| | --- | | |
| A | US-A-3 105 909 (JONES) <br> * Patentanspruch * | 1-5 | RECHERCHIERTE SACHGEBIETE (Int. Cl. ³) |
| | ----- | | |
| | | | H 01 M |

Der vorliegende Recherchenbericht wurde für alle Patentansprüche erstellt.

| Recherchenort <br> DEN HAAG | Abschlußdatum der Recherche <br> 10-01-1983 | Prüfer <br> STANGE R.L.H |
|---|---|---|